# EUROPÄISCHE PATENTSCHRIFT

(11) **EP 2 266 434 B1**
(45) Veröffentlichungstag und Bekanntmachung des Hinweises auf die Patenterteilung: **07.09.2016**
(21) Anmeldenummer: 09008154.8
(22) Anmeldetag: 22.06.2009
(51) Int. Cl.: A46B 13/08, A46B 9/10, A46B 7/06, A45D 40/26, A46B 9/02

(54) **Kosmetik-Applikator mit innenliegenden, herausschiebbaren, drehbaren Applikatoren**
Cosmetic applicator with internal pull-out applicators
Applicateur cosmétique doté d'applicateurs situés à l'intérieur, pouvant sortir de manière coulissante et rotatifs

(43) Veröffentlichungstag der Anmeldung: 29.12.2010
(73) Patentinhaber: GEKA GmbH, 91572 Bechhofen (DE)
(72) Erfinder: Weigel, Friedrich, 91749 Wittelshofen (DE)
(74) Vertreter: Misselhorn, Hein-Martin

(56) Entgegenhaltungen:
- WO-A2-2009/095610
- FR-A1- 2 894 793
- US-A- 4 598 723

## Beschreibung

Die Erfindung betrifft einen Applikator mit einer Bürste zur Applikation dekorativer Kosmetika, die bis zu ihrem Trocknen im Anschluss an die Applikation eine fließfähige Beschaffenheit aufweisen. Solche Kosmetika, zu deren typischen Vertretern Mascara gehört, werden üblicherweise aus einem flaschenartigen Vorratsbehälter heraus aufgetragen, indem die Bürste des Applikators in den Vorratsbehälter eingetaucht und dadurch mit dem Kosmetikum befrachtet wird.

Solche Bürsten weisen meist einen stabförmigen Träger auf, im Bereich von dessen Außenumfang ein sich in Umfangsrichtung erstreckendes, aus überwiegend radial nach außen abstehenden Borsten bestehendes Borstenfeld angeordnet ist. Dieses Borstenfeld weist stationäre Borsten auf, also Borsten, deren Fußbereich relativ zum Griff des Applikators dauerhaft in einer Position festgelegt ist.

Derartige Applikatoren sind in vielfältiger Form bekannt. Sie dienen vorrangig zur Applikation von Mascara, finden teilweise aber auch zum Färben von Augenbrauen und gelegentlich auch zum Färben von anderen Haarsträhnen Verwendung.

Die Bürsten solcher Applikatoren haben im Regelfall eine Doppelfunktion. Sie werden zum einen zum Applizieren des Kosmetikums verwendet und zum anderen zum Kämmen und Separieren der behandelten Haarsträhnen - so wie in der nachfolgenden Beschreibungseinleitung stellvertretend am Beispiel eines Mascara-Bürstchens zu erläutern ist.

Zu Beginn jeder Applikation wird die Applikatorbürste in das Mascara eingetaucht und beladen, indem die Freiräume zwischen den Borsten mit dem Mascara gefüllt werden. Beim Herausziehen der Applikatorbürste aus dem Mascara-Vorrat passiert die Applikatorbürste einen Abstreifer, der die Menge der auf der Bürste verbleibenden Mascara-Beladung bestimmt.

Die Kontrolle der Mascara-Beladung ist entscheidend für die Leistung des Applikators: Wird die Mascara-Beladung durch den Abstreifer zu stark verringert, dann wird zu wenig Mascara auf die Wimpern aufgetragen, was nur ein unbefriedigendes Make-up ergibt bzw. einen weiteren Applikationsvorgang erforderlich macht. Wird hingegen zuviel Mascara auf die Wimpern aufgetragen, dann können die Wimpern nicht richtig gekämmt und separiert werden, so dass das Make-up grob und klumpig erscheint.

Die Intensität, mit der die Applikatorbürste durch das Eintauchen und anschließende Abstreifen beladen wird, hängt von einer ganzen Reihe von Faktoren ab, darunter maßgeblich von der Dichte des Borstenbesatzes bzw. des freien Volumens zwischen den Borsten, aber auch vom Durchmesser, von der Länge und der materialbedingten Steifigkeit der Borsten und der Viskosität des Mascara sowie von den Eigenschaften des Abstreifers.

Da die Anzahl der miteinander verknüpften Parameter groß ist, führt jegliche Auslegung einer Applikatorbürste am Ende zu einem Kompromiss zwischen der Auftragseffizienz und der Kämm- bzw. Trennwirkung.

Im Stand der Technik sind bereits zahlreiche Versuche unternommen worden, um Konstruktionen zu finden, die einen Kompromiss bieten, der möglichst breite Akzeptanz findet.

So wird durch die europäische Patentanmeldung EP 1 478 256 und eine ganze Reihe weiterer Patentanmeldungen vorgeschlagen die Leistung des Applikators dadurch zu verbessern, dass stationäre Borsten mit verschiedenen Längen an derselben Bürste verwendet werden - die Applikatorbürste weist mindestens ein erstes Feld mit kürzeren Borsten und größeren Zwischenräumen zwischen diesen Borsten auf, das gut mit einer größeren Menge Mascara beladen werden kann und daher zur Applikation des Mascara dient, d. h. zum Auftragen des Mascara auf die Wimpern. Daran schließt sich in Umfangsrichtung der Applikatorbürste mindestens ein Feld mit längeren Borsten an, mittels derer die Wimpern anschließend effizient gekämmt und separiert werden können.

Einen anderen Ansatz zur Erzielung eines möglichst breite Akzeptanz findenden Kompromisses schlägt die japanische Patentanmeldung 2008149047 A vor. Nach der Lehre dieser Patentanmeldung soll die Bürste des Applikators ebenfalls mit zwei unterschiedlichen Borstenfeldern aus stationären Borsten versehen sein, die allerdings nicht in Umfangsrichtung der Applikatorbürste aufeinanderfolgen, sondern in Längsrichtung der Applikatorbürste nebeneinander angeordnet sind. Dabei ist das griffnahe erste Borstenfeld mit entsprechenden Borsten und größeren Zwischenräumen zwischen diesen Borsten versehen und eignet sich daher besonders gut zum Auftragen des Mascara auf die Wimpern. Demgegenüber ist das griffferne zweite Borstenfeld mit entsprechend langen Borsten ausgestattet. Es eignet sich daher besonders gut zum Kämmen und Separieren der bereits mit dem Mascara benetzten Wimpern.

Ein ganz anderer Lösungsansatz wird mit dem Applikator verfolgt, der von der WO 2006/130643 A2 vorgeschlagen wird. Bei dem von diesem Dokument vorgeschlagenen Applikator handelt es sich um einen Applikator mit einer motorisch angetriebenen Applikatorbürste, die ein Borstenfeld aufweist, das als Ganzes rotiert oder oszilliert. Alternativ wird im Rahmen einer speziellen Ausführungsform eine Applikatorbürste vorgeschlagen, die ein Borstenfeld aus überwiegend stationären Borsten besitzt, innerhalb dessen eine Leiste aus mobilen Borsten vorgesehen ist. Die besagte Leiste wird von einem elektromagnetisch erregten Feder-Masse-Schwinger angetrieben, der die Leiste auf Knopfdruck in Längsrichtung der Applikatorbürste um ihre Ruheposition herum oszillieren lässt, sobald die Applikatorbürste aus dem sie mit Mascara befrachtenden Vorratsbehälter herausgezogen, abgestreift und mit den Wimpern in Kontakt gebracht worden ist.

Eine wiederum andere Lösung ist aus dem US-Patent 4 598 723 bekannt. Hier ist ein Pinsel vorgesehen, der entweder in ein an seinem Außenumfang mit als Applikationsorgane fungierenden Rillen versehendes Rohr hineingezogen werden kann, so dass nur noch die Rillen zum Speichern und Auftragen von Kosmetikmasse benutzt werden können, oder der alternativ aus dem Rohr herausgeschoben werden kann, um seinerseits zum Speichern und Auftragen von Kosmetikmasse eingesetzt zu werden.

Während die beiden erstgenannten Applikatortypen bereits einen guten Kompromiss darstellen, weil sie sowohl recht gut zum Auftragen als auch zum Kämmen/Separieren geeignet sind, ist der genannte motorisch angetriebene Applikatortyp bis dato eher ein Theoretikum geblieben, das sich am Markt kaum durchsetzen konnte - was vermutlich nicht zuletzt daran liegt, dass dieser motorisch angetriebene Applikator eine starke Spritzneigung aufweisen dürfte, zumindest wenn man das Bostenfeld nicht akribisch abgestreift hat, bevor man den Motor einschaltet.

Bei allen beschriebenen Applikatortypen stellt sich das Problem, dass die Anwenderin / der Anwender (im Folgenden insgesamt als "die Anwenderin" bezeichnet) nicht ohne Weiteres aktiv Einfluss darauf nehmen kann, wie intensiv die Applikatorbürste durch Eintauchen und anschließendes Abstreifen mit dem zu applizierenden Mascara befrachtet wird. Vielmehr wird die Intensität, mit der die Applikatorbürste jeweils durch ein Eintauchen und Abstreifen befrachtet wird, maßgeblich durch die herstellerseitige Auslegung des Besatzes der Applikatorbürste, des Abstreifers und nicht zuletzt der Konsistenz des Mascara bzw. des zu applizierenden Kosmetikums bestimmt. Die Anwenderin wird in Folge dessen insoweit vor Vorgaben gestellt, die sie hinzunehmen hat, wenn sie das konkrete Produkt verwenden möchte, anstatt sich eines insoweit anders ausgelegten Produkts zuzuwenden.

Im Lichte dessen ist es die Aufgabe der Erfindung einen Applikator mit einer Bürste anzugeben, die es der Anwenderin gestattet aktiv Einfluss auf das Applikationsverhalten des Borstenbesatzes des Applikators zu nehmen, vorzugsweise speziell darauf, wie intensiv die Applikatorbürste durch Eintauchen und anschließendes Abstreifen mit Kosmetikum befrachtet wird, das anschließend für den Auftrag nutzbar ist.

Die Lösung dieser Aufgabe erfolgt mit den Merkmalen des Anspruchs 1.

Demnach weist die Applikatorbürste einen im Regelfall mehrteiligen Träger auf, der mit einem Borstenfeld ausgerüstet ist, das aus nach außen von dem Träger abstehenden Borsten besteht. Dabei umfasst das Borstenfeld stationäre Borsten, also Borsten, deren Fußbereich an dem Täger der Applikatorbürste festgelegt ist. Zusätzlich wird das Borstenfeld aus mobilen Borsten gebildet, deren Fußbereich relativ zum Fußbereich der stationären Borsten verschiebbar ist und die zumindest in einer ihrer möglichen Positionen in einen Freiraum zwischen den stationären Borsten oder eines Teils davon hineinragen und in dieser Position gemeinsam mit den stationären Borsten das (aktive) Borstenfeld des Applikators bilden. Dabei ist die Applikatorbürste so ausgestaltet, dass zumindest in einem Teil des Borstenfeldes der Freiraum zwischen den stationären Borsten, der durch ein Eintauchen der Bürste in das Reservoir mit dem Kosmetikum und ggf. das Wiederabstreifen der Bürste mit dem Kosmetikum befrachtet werden kann, durch die Veränderung der Position der mobilen Borsten beeinflusst werden kann - und zwar willkürlich, d. h. nach Vorgabe der Benutzerin, womit ein von der Benutzerin aktiv in seinem Applikationsverhalten herstellbarer Applikator geschaffen ist. Dabei weist der erste stabförmige Träger an seinem Außenumfang mindestens einen Umfangsschlitz auf, durch den hindurch mindestens eine Borste bzw. Borstenscheibe des zweiten stabförmigen Trägers nach außen ragen kann. Zumindest eine Borste bzw. Borstenscheibe kann durch Verschieben innerhalb des ihr zugeordneten Umfangsschlitzes in verschiedene Positionen relativ zu den Borsten bzw. Borstenscheiben es ersten stabförmigen Trägers gebracht werden. Der Umfangsschlitz erstreckt sich erfindungsgemäß bis in einen Bereich zwischen zwei oder mehreren in Längsrichtung nebeneinander angeordneten stationären Borsten bzw. Borstenscheiben. Dadurch kann die entlang des Schlitzes bewegliche Borste bzw. Borstenscheibe so zwischen benachbarte stationäre Borsten bzw. Borstenscheiben gebracht werden, dass sie mit diesen in Längsrichtung gesehen auf einer Linie liegt. Dadurch wird ein anwenderseitig verstellbarer Borstenbesatz geschaffen, mit dem sich unterschiedliche Applikationseigenschaften erreichen lassen, je nachdem wie die Benutzerin die mobilen und die Stationären Borsten relativ zueinander positioniert hat.

Vorzugsweise ist die Ausgestaltung der Applikatorbürste derart, dass die Benutzerin den Fußbereich der mobilen Borsten gezielt und nicht nur zufällig in eine gewünschte Position relativ zum Fußbereich der stationären Borsten bringen kann. Die gewählte Position behält der Fußbereich der mobilen Borsten dann aufgrund von Friktion, Verrastung und/oder der von der Benutzerin aufgebrachten Haltekräfte zumindest während des Eintauchens der Applikatorbürste, vorzugsweise jedoch während der gesamten Anwendung, im Wesentlichen bei.

Dabei kommt es für die Intensität der Befrachtung, die hier variiert werden soll, nicht allein auf das Volumen des Freiraums im streng mathematischen Sinne an, sondern gerade auch darauf, von wie vielen Borsten der Freiraum örtlich durchsetzt bzw. berandet wird und welche Charakteristik diese Borsten aufweisen (Länge, Härte, Winkel dieser Borsten zur Oberfläche des Borstenträgers) bzw. auf die konkrete Geometrie des Freiraums.

Weitere bevorzugte Ausgestaltungsformen, Wirkungen und Vorteile ergeben sich aus den nachfolgend anhand der Figuren beschriebenen Ausführungsbeispiele. Es zeigen dabei:
- Figuren 1a bis 1c:: ein erstes Ausführungsbeispiel der Erfindung mit sowohl in Längs- als auch in Umfangsrichtung beweglichen mobilen Borsten;
- Figuren 2a bis 2c:: ein zweites nicht erfindungsgemäßes Ausführungsbeispiel, der Erfindung, bei dem die mobilen Borsten nur in Längsrichtung beweglich sind;
- Figuren 3a bis 3c:: ein drittes nicht erfindungsgemäßes Ausführungsbeispiel, dass dem zweiten Ausführungsbeispiel weitgehend entspricht, jedoch mehrere Reihen mit mobilen Borsten aufweist;
- Figuren 4a bis 4c:: ein viertes erfindungsgemäßes Ausfüngsbeispiel, das dem ersten Ausführungsbeispiel im Wesentlichen entspricht, jedoch Borstenscheiben statt Borsten verwendet;
- Figuren 5a bis 5d:: ein fünftes erfindungsgemäßes Ausführungsbeispiel, welches im Wesentlichen dem vierten Ausführungsbeispiel entspricht, jedoch mobile Borsten statt mobiler Borstenscheiben verwendet;
- Figuren 6a bis 6d:: ein sechster nicht erfindungsgemäßes Ausführungsbeispiel, bei welchem die mobilen Borsten eine besondere, gekrümmte Gestalt haben;
- Figuren 7a bis 7c:: ein siebtes erfindungsgemäßes Ausführungsbeispiel, das weitestgehend dem sechsten Ausführungsbeispiel entspricht, statt jedoch mobiler Borsten, mobile Borstenscheiben verwendet;
- Figur 8:: ein weiteres erfindungsgemäßes Ausführungsbeispiel, das eine Variante des siebten Ausführungsbeispiels darstellt und sich durch die spezielle Art der mobilen Borsten unterschiedet;
- Figuren 9a bis 9c:: ein neuntes nicht erfindungsgemäßes Ausführungsbeispiel, der Erfindung, das ebenfalls abgewinkelte mobile Borsten besitzt, die als Greifer ausgebildet sind;
- Figuren 10a bis 10d:: ein zehntes, weiteres nicht erfindungsgemäßes Ausführungsbeispiel, das als Greifer ausgebildet ist;
- Figuren 11a bis 11d:: ein elftes erfindungsgemäßes Ausführungsbeispiel, welches einen mobilen Füllkörper zum wahlweisen Ausfüllen des v-förmigen Freiraums und/oder Verschieben des Kosmetikums in umliegende Borstenbereiche aufweist;
- Figur 12:: ein zwölftes nicht erfindungsgemäßes Ausführungsbeispiel, welches dem elften Ausführungsbeispiel entspricht, aber einen etwas anders gestalteten Füllkörper aufweist;
- Figuren 13a bis 13d:: ein dreizehntes nicht erfindungsgemäßes Ausführungsbeispiel mit in das Innere des Applikators einziehbaren mobilen Borsten.

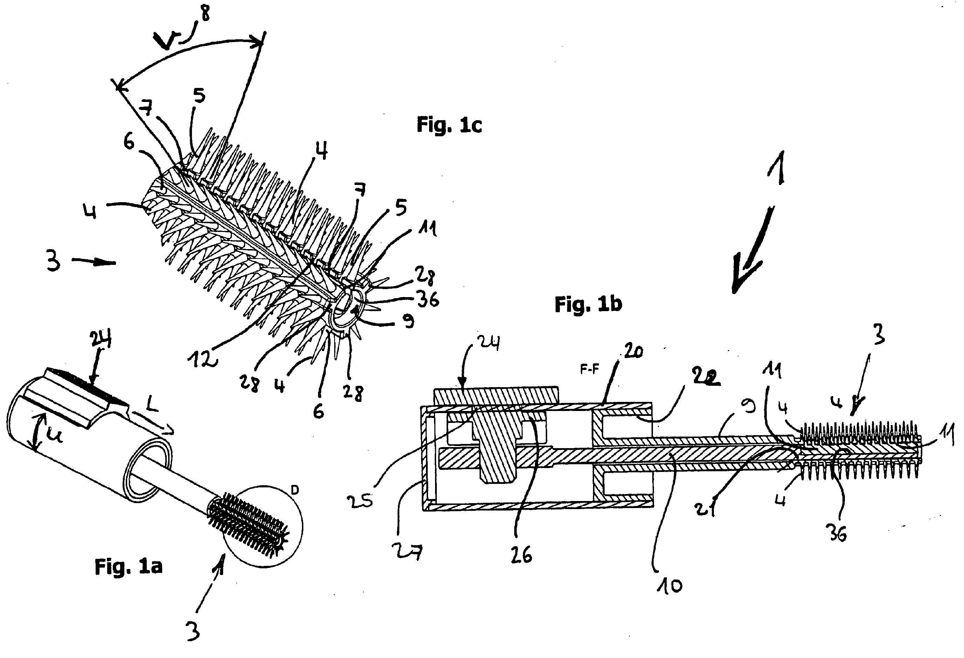

Die Figuren 1a, 1b und 1c beschreiben ein erstes Ausführungsbeispiel des erfindungsgemäßen Applikators 1.

Es handelt sich bei diesem Ausführungsbeispiel um einen als Mascara-Bürste ausgebildeten Applikator.

Wie man am besten anhand der Figur 1b sieht, weist der Applikator 1 einen Griff 20 auf. An diesem Griff ist ein erster Träger 9 befestigt, der mit im Wesentlichen radial nach außen abstehenden stationären Borsten 4 versehen ist - der Fußbereich 6 (Fig. 1c) dieser stationären Borsten 4 ist an dem ersten Träger 9 festgelegt. Die stationären Borsten sind vorzugsweise einstückig mit dem ersten Träger 9 hergestellt, im Regelfall durch Spritzgießen. Die stationären Borsten 4 bilden im Idealfall einen im Wesentlichen allseitig abstehendenden, hier als zumindest im Wesentlichen zylindrisch zu bezeichnenden Borstenbesatz. Dieser weist an zumindest einer Stelle einen in Längsrichtung verlaufenden, den Borstenbesatz in dieser Richtung vorzugsweise auf gesamter Länge durchsetzenden Freiraum 8 auf, dessen erfindungsgemäße Funktion gleich noch näher zu erläutern ist.

Der Vollständigkeit halber ist anzumerken, dass es der Erfindung keinen allzu großen Abbruch tut, wenn der Borstenbesatz bei ansonsten gleicher Ausführung nur die Form eines Halbzylinders hat, oder sogar als ebener Borstenbesatz ausgestaltet ist, der von zumindest einem Freiraum der hier in Rede stehenden Art durchsetzt wird.

Der erste Träger 9 ist im vorliegenden Fall rohrförmig ausgestaltet. Er weist einen Hohlraum auf, der den zweiten Träger 10 beweglich aufnimmt.

Der zweite Träger ist mit mobilen Borsten 5 bestückt. Die mobilen Borsten 5 bilden bei diesem Ausführungsbeispiel eine kammartige Reihe aus einzelnen, in Längsrichtung gesehen hintereinander angeordneten Borsten. Die mobilen Borsten 5 sind bei der vorliegenden Konstruktion am zweiten Träger 10 befestigt worden, nachdem dieser in den ersten Träger 9 eingeschoben worden ist. Zu diesem Zweck weist der zweite Träger 10 an seinem der Griffseite abgewandten Ende einen stirnseitig zugänglichen Sitz 36 auf, in den der die mobilen Borsten tragende Teil über die stirnseitige Öffnung des ersten Trägers 9 eingesetzt bzw. eingeschoben werden kann. Die Befestigung erfolgt dann beispielsweise durch Verrasten, Kleben oder Verschweißen. Der entscheidende Punkt ist, dass der Fußbereich 7 der mobilen Borsten an dem zweiten Träger 10 festgelegt ist.

Die stationären und die mobilen Borsten bilden gemeinsam das Borstenfeld der Applikatorbürste, mittels dessen das Auftragen des Mascara auf die Augenwimpern und das anschließende Kämmen und Separieren der Augenwimpern bewerkstelligt wird. Wie an späterer Stelle erläutert wird, können alle Borsten bestimmte, unterschiedliche Konturen aufweisen, vorzugsweise sind sie kegelig ausgeführt.

Während die Innenoberfläche des hier zum Einsatz kommenden ersten Trägers 9 glattflächig gestaltet ist, ist seine außenseitige Umfangsfläche lokal mit Leisten 28 versehen, die die außenseitige Umfangsfläche in Sektoren aufteilen, innerhalb derer das im Fußbereich der Borsten befindliche Mascara zurückgehalten wird, was die Tropfgefahr reduziert bzw. das Applikationsverhalten verbessert. Im vorliegenden Fall sind die Leisten 28 auf ihrer Außenseite mit Borsten versehen.

Wie am besten anhand der Figur 1c zu erkennen ist, ist der erste Träger 9 mit einem Längsschlitz 11 versehen. In zumindest eine seitliche Flanke dieses Längsschlitzes 11 mündet eine Anzahl von Umfangsschlitzen 12 ein, deren Funktion gleich noch näher zu erläutern ist.

Aufgrund des Längsschlitzes 11 ist zwischen den ansonsten regelmäßig bzw. nach einem geschlossenen Muster über den Außenumfang des ersten Trägers 9 verteilten stationären Borsten 4 ein gesonderter, hier annähernd v-förmiger Freiraum 8 ausgebildet, so wie durch den mit "V" gezeichneten Bogen in Fig. 1c symbolisiert (im Falle eines nicht-runden, ebenen Borstenfeldes ist der Freiraum natürlich nicht v-förmig, sondern im Regelfall rechteckig). Dieser Freiraum 8 ist - neben den nicht näher bezeichneten Freiräumen zwischen den einzelnen stationären Borsten - in besonderem Maß dazu bestimmt mit Mascara befrachtet zu werden, welches dann zum Auftrag auf die Augenwimpern zur Verfügung steht. Im Gegensatz zu den nicht näher bezeichneten Freiräumen zwischen den einzelnen stationären Borsten ist dieser Freiraum 8 hier variabel, da die mobilen Borsten 4 durch entsprechendes Verdrehen des zweiten Trägers 10 und/oder Verschieben des zweiten Trägers 10 in Längsrichtung 41 in verschiedene Positionen innerhalb des Freiraums 8 gebracht werden können.

So gestatten es beispielsweise die in Umfangsrichtung von dem Längsschlitz 11 abgehenden Umfangsschlitze 12 die mobilen Borsten 5 so zu positionieren, dass sie in Längsrichtung gesehen mit einer Reihe stationärer Borsten 4 fluchten, das heißt so zu positionieren, dass sich jeweils zwischen zwei stationären Borsten 4 eine mobile Borste 5 befindet bzw. umgekehrt - so wie von Fig. 1c illustriert. Nehmen die mobilen Borsten 5 diese Position ein, dann steht der variable Freiraum 8 weit offen und wird so während des Eintauchens der Applikatorbürste in das Mascara mit einer großen Menge Mascara befrachtet, welches recht gut auf die Wimpern aufgebracht werden kann, da es keine Schwierigkeiten bereitet die Wimpern mit dem in dem offen liegenden v-förmigen Freiraum bereitgestellten Mascara zu benetzen.

Andererseits ist es, was in den Figuren nicht zeichnerisch dargestellt ist, alternativ möglich, den Fußbereich der mobilen Borsten beispielsweise so innerhalb des Längsschlitzes 11 zu positionieren, dass die mobilen Borsten das Muster der stationären Borsten fortsetzen - so dass das Borstenfeld dann quasi in sich geschlossen ist, jedenfalls im Wesentlichen. Nehmen die mobilen Borsten 5 diese Position ein, dann steht der variable Freiraum 8 deutlich weniger weit offen, d. h. die Applikatorbürste wird während ihres Eintauchens in das Mascara mit einer deutlich anderen Menge Mascara befrachtet bzw. die Wimpern kommen bei der Applikation weniger intensiv mit dem im Freiraum 8 bereitstehenden Mascara in Kontakt, weil die mobilen Borsten in dieser Position ein gewisses Hindernis für die Wimpern darstellen.

Auf diese Art und Weise ist die Charakteristik der Applikatorbürste in einem weiten Bereich einstellbar, da die mobilen Borsten ja nicht nur in die beiden soeben geschilderten Extrempositionen gebracht werden können, sondern auch eine ganze Reihe von zwischen diesen beiden Extremen liegende Positionen der mobilen Borsten 5 möglich ist. Auf diese Art und Weise wird es möglich, dass die Anwenderin die Charakteristik der Applikatorbürste so variiert bzw. einstellt, dass sie ihrem individuellen Anwendungsempfinden entspricht. Dabei kann zugleich auch sehr gut objektiven Gegebenheiten Rechnung getragen werden, wie etwa der nie ganz auszuschließenden Änderung der materialspezifischen Eigenschaften - etwa wenn im Falle eines teueren und nur selten verwendeten Mascara das Mascara mit der Zeit etwas eindickt und daher sein Applikationsverhalten auf der Bürste etwas verändert.

Daneben besteht die Möglichkeit, die mobilen Borsten auch dazu zu verwenden, um das zunächst in dem v-förmigen Freiraum 8 befindliche Mascara (bzw. einen Teil hiervo) in die benachbarten Freiräume zwischen den stationären Borsten zu verteilen. Das kann beispielsweise dadurch erfolgen, dass der zweite Träger 10 derart hin und her bewegt wird, dass die mobilen Borsten in dem v-förmigen Freiraum 8 eine "scheibenwischerartige" Bewegung ausführen, die ggf. auch von einer gewissen Bewegung in Längsrichtung überlagert sein kann.

Es ist hier also nicht nur so, dass die Anwenderin durch entsprechende Positionierung der mobilen Borsten 5 Einfluss auf die Intensität nehmen kann, mit der der v-förmige Freiraum 8 von Haus aus beladen wird. Vielmehr kann sie die Beladungsmenge auch nachträglich beeinflussen, indem durch ein mehr oder minder intensives Bewegen der mobilen Borsten 5 ein bestimmter Teil der Mascara-Beladung aus dem v-förmigen Freiraum 8 zwischen die umgebenden, hier stationären Borsten verfrachtet wird.

Darüber hinaus besteht bei entsprechender Ausgestaltung der ersten und zweiten Träger sowie des Griffs 20 und der sogleich noch näher zu erläuternden Betätigungsvorrichtung 23 die Möglichkeit bei Bedarf den zweiten Träger derart in Längsrichtung gegenüber dem ersten Träger zu verschieben, dass zumindest ein Teil der mobilen Borsten außerhalb des mit stationären Borsten besetzten Bereichs bzw. Umfangsbereichs liegt. Der Teil mit den mobilen Borsten 5 kragt dann an der griffabgewandten Stirnseite des Applikators aus und steht dort als ungehindert von den stationären Borsten zugänglicher Kamm zur Verfügung (nicht zeichnerisch dargestellt) - wozu sich die im vorliegenden Ausführungsbeispiel in Längsrichtung einreihig hintereinander aufgestellten mobilen Borsten 5 besonders gut eignen.

Der Befestigungsabschnitt 22 des.ersten Trägers 9, der zur Verbindung des ersten Trägers mit dem Griff 20 dient, bildet zugleich ein Innengewinde oder einen Pressitz aus, mittels dessen der Griff auf einen entsprechenden Kragen eines Mascara bevorratet haltendenden Fläschchens aufgeschaubt bzw. dichtend aufgeschoben werden kann. Der zur Befestigung an dem Griff 20 dienende Abschnitt des ersten Trägers 9 bildet also einen Deckel aus, der das hier nicht gezeigte Mascara-Fläschchen bei Nichtgebrauch im Wesentlichen luftdicht verschließt. Gleichzeitig schützt der Abschnitt 22 auch das Innere des Griffs 20 vor Luftzutritt, so dass im Laufe der Zeit in den Innenbereich des Griff 20 eingeschlepptes Mascara nicht allzu schnell so weit eintrocknet, dass die Beweglichkeit der verschiebbaren Komponenten übermäßig behindert wird.

Sieht man von dem Befestigungsabschnitt 22 des ersten Trägers 9 ab, weist der erster Träger 9 eine im Wesentlichen rohrförmige Gestalt auf. Im Bereich des griffseitigen Endes des Längsschlitzes 11 ist der erste Träger auf seiner Rohrinnenseite mit einer kurzen Gleitführung 21 versehen. In dieser Führung gleitet der zweite Träger 10, der hier ebenfalls die Gestalt eines Rundstabes hat. Diese Gleitführung weist ein hinreichend enges Spaltmaß auf (evtl. sogar eine gewisse elastische Vorspannung) und fungiert dadurch zugleich als Dichtung - indem sie einen unerwünschten Austritt von Mascara aus dem Mascara-Vorrat in Richtung des Griffs verhindert, aber auch einem längerfristigen Eintrocknen des Mascara-Vorrats entgegenwirkt.

Die Führung 21 ist in Richtung der Längserstreckung so kurz, dass der erste Träger 9 und der zweite Träger 10 über mehr als 90 % ihrer Längserstreckung hinweg mit erheblichem Spiel ineinander laufen. Hierdurch wird verhindert, dass es durch das im Laufe der Zeit unweigerlich in den Spalt zwischen den beiden Trägern 9, 10 eingeschleppte Mascara zu einem großflächigen Verkleben des ersten Trägers 9 und des zweiten Trägers 10 kommt - um so enger ein Spalt ist, in den das Mascara eindringt, desto größer ist die von dem Mascara entfaltete "Klebewirkung".

Das griffseitige Ende des zweiten Trägers 9 ist mit einem hier als eine Art Schieber ausgeführten Manipulator 24 verbunden, der in einer entsprechend großzügig angelegten Grifföffnung 25 gelagert ist und daher in Richtung der Pfeile U und L hin und her geschoben werden kann, so wie das die Fig. 1a illustriert. Dieser Manipulator 24 ermöglicht es der Benutzerin also die Position der mobilen Borsten 5 vom Griff 20 aus zu wählen, ohne hierbei mit dem Mascara in Berührung zu kommen.

Sofern nicht ohnehin hier nicht gezeigte Rastpositionen zur Festlegung des Manipulators in bestimmten Vorzugsstellungen vorgesehen sind, ist es zweckmäßig, dass der Manipulator 24 mit einer hinreichenden Reibung auf dem Griff 20 gleitet, so dass sich die Position der mobilen Borsten nicht unwillkürlich von allein verstellen kann. Um herstellungsseitig hierfür den nötigen Anpressdruck vorzugeben, trägt der Manipulator griffinnenseitig einen Kragen 26, der die Reibung erhöht. Dieser Kragen 26 verhindert zudem, dass im Laufe der Zeit womöglich in den Griff eingedrungenes Mascara über die Öffnung 25 bis in den Bereich der Außenseite des Manipulators 24 gelangen kann. Im Übrigen verbessert der Kragen 26 die Abdichtung des Griffs 20 auch insoweit, dass die Verdunstung über die Öffnung minimiert wird, so dass die Gefahr eines längerfristigen Eintrocknens des Mascaravorrats über den (kleinen) Luftspalt zwischen dem ersten und dem zweiten Träger weiter verringert wird.

In bestimmten Fällen ist der Manipulator weder durch Verrastungen noch durch Friktion so festgelegt, dass er sich nicht unwillkürlich von allein verstellen kann. Der Manipulator ist, wie man sieht, dann jedoch so gestaltet, dass die Anwenderin die mobilen Borsten für die Dauer der Applikation dadurch festsetzen kann, dass sie den Manipulator kurzerhand gegriffen hält und so an einer unerwünschten Bewegung hindert.

Das der Applikatorbürste angewandte Ende des Griffs 20 ist mit einem Deckel 27 versehen, der die Öffnung, über die der zweite Träger 10 im Zuge der Montage eingeschoben und ggf. mit dem Manipulator 24 verbunden wird, abdichtet.

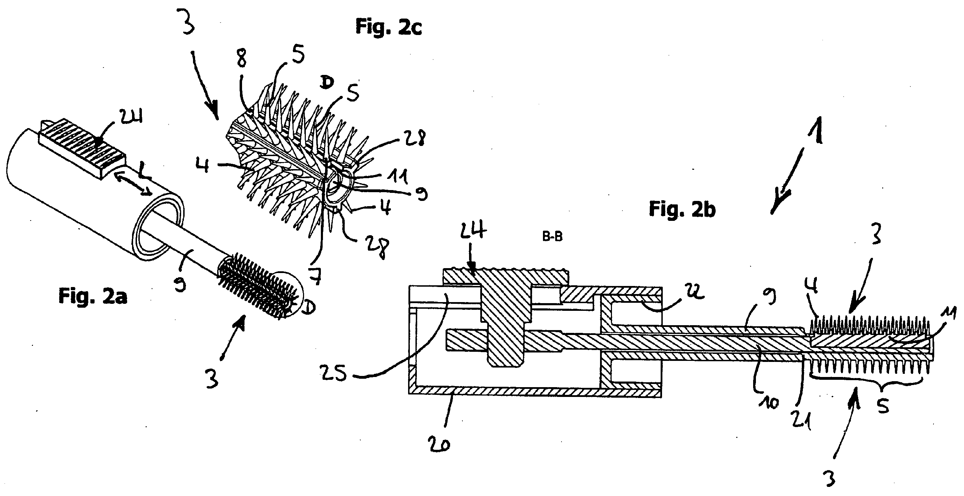

Die Figuren 2a, 2b und 2c beschreiben ein zweites nicht erfindungsgemäßes Ausführungsbeispiel.

Soweit die Figuren 1 und 2 identisch sind, gilt das für das erste Ausführungsbeispiel Gesagte sinngemäß auch für dieses zweite Ausführungsbeispiel.

Dieses Ausführungsbeispiel unterscheidet sich von dem ersten Ausführungsbeispiel dadurch, dass im ersten Träger 9 nur ein Längsschlitz 11 vorhanden ist - Umfangsschlitze 12 sind hier nicht vorgesehen. Stattdessen ist der zweite Träger 10 unterhalb des Fußbereichs der mobilen Borsten 5 mit einer Führungsleiste 29 versehen (Fig. 2c). Diese stellt sicher, dass der erste und der zweite Träger im Wesentlichen nur in Längsrichtung relativ zueinander verschoben werden können.

Dennoch kann der variable Freiraum 8 auch bei diesem Ausführungsbeispiel auf unterschiedliche Art und Weise verändert werden.

Wie man am besten anhand der Fig. 2b sieht, weist der Griff 20 bei dieser Konstruktion eine sehr großzügig zugeschnittene Grifföffnung 25 auf, so dass der zweite Träger 10 aus der von Fig. 2b gezeigten Position heraus noch ein merkliches Stück weit in Längsrichtung nach rechts verschoben werden kann. Hierdurch kommt ein wesentlicher Teil der mobilen Bosten 5 außerhalb des Bereichs der stationären Borsten 4 und damit auch außerhalb des hier ebenfalls v-förmigen variablen Freiraums 8 zwischen den stationären Borsten 4 zu liegen. Die Applikatorbürste dieses Ausführungsbeispiels kann also in ähnlicher Weise eingesetzt werden, wie die aus der einleitend beschriebenen japanische Patentanmeldung 2008149047 A bekannte Bürste - mit dem Unterschied, dass die Länge des v-förmigen Freiraums, innerhalb derer sich keine mobilen Borsten 5 befinden, nach Bedarf eingestellt werden kann und dem weiteren Unterschied, dass ggf. an der griffabgewandten Stirnseite des Applikatorbürstchens ein durch die mobilen Borsten gebildeter Kamm zur Verfügung steht, so wie bereits oben für das erste Ausführungsbeispiel beschrieben.

Darüber hinaus kann der v-förmige Freiraum bzw. sein Applikationsverhalten (aber insbesondere auch seine Kämm- bzw. Separationswirkung) in bestimmtem Umfang auch dadurch variiert werden, dass die Position der mobilen Bürsten gezielt eingestellt wird - die mobilen Borsten 4 werden entweder so positioniert, dass sie in Umfangsrichtung gesehen in einer Reihe mit den jeweiligen stationären Borsten 5 stehen und damit das Muster der stationären Borsten fortsetzen - so dass das Borstenfeld dann quasi (im Wesentlichen) in sich geschlossen ist. Alternativ werden die mobilen Borsten so positioniert, dass sie in Umfangsrichtung gesehen in den Zwischenräumen zwischen benachbarten Reihen stationärer Borsten stehen und damit das Muster der stationären Borsten unterbrechen. Hieraus ergeben sich ebenfalls unterschiedliche Anwendungseigenschaften.

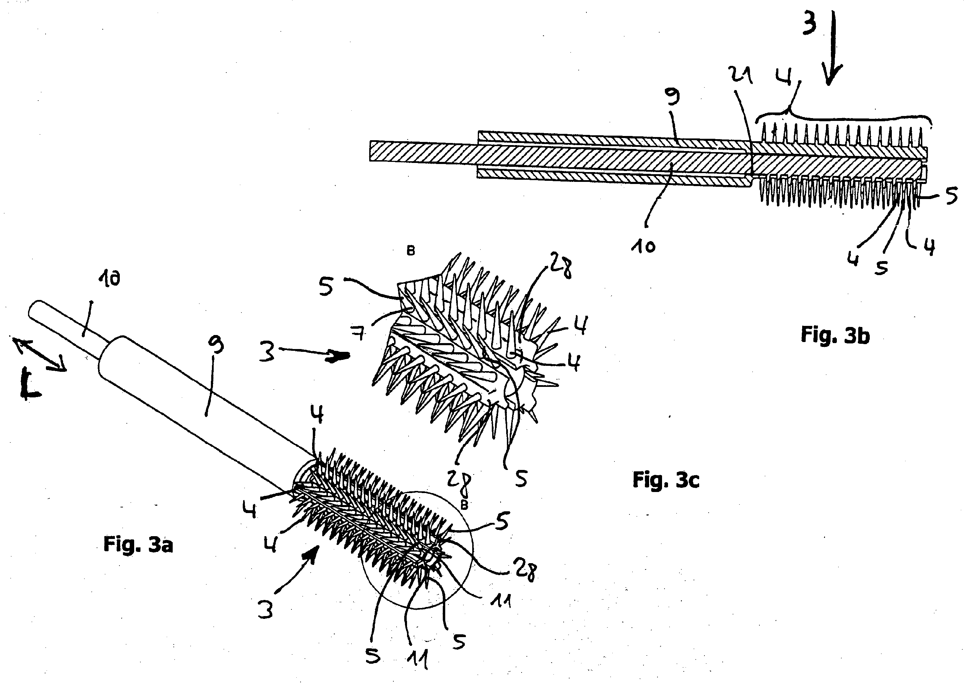

Die Figuren 3a, 3b und 3c beschreiben ein drittes nicht erfindungsgemäßes Ausführungsbeispiel.

Dieses dritte Ausführungsbeispiel unterscheidet sich von dem zweiten Ausführungsbeispiel nur dadurch, dass nicht nur in einem Umfangsbereich mobile Borsten 4 vorgesehen sind sondern in mehreren voneinander beabstandeten Umfangsbereichen. Der erste Träger 9 weist also mehrere parallele Längsschlitze 11 auf. Hingegen weist er bei diesem dritten Ausführungsbeispiel keine Umfangsschlitze auf. Indes ist auch eine zeichnerisch nicht dargestellte Variante denkbar, bei der in jeden der Längsschlitze auch Umfangsschlitze münden, die also dem ersten Ausführungsbeispiel nahe kommt.

Obwohl die Figuren 3a bis 3c von der nochmaligen Darstellung des Griffs 20 absehen, ist auch dieser mit dem des zweiten Ausführungsbeispiels identisch.

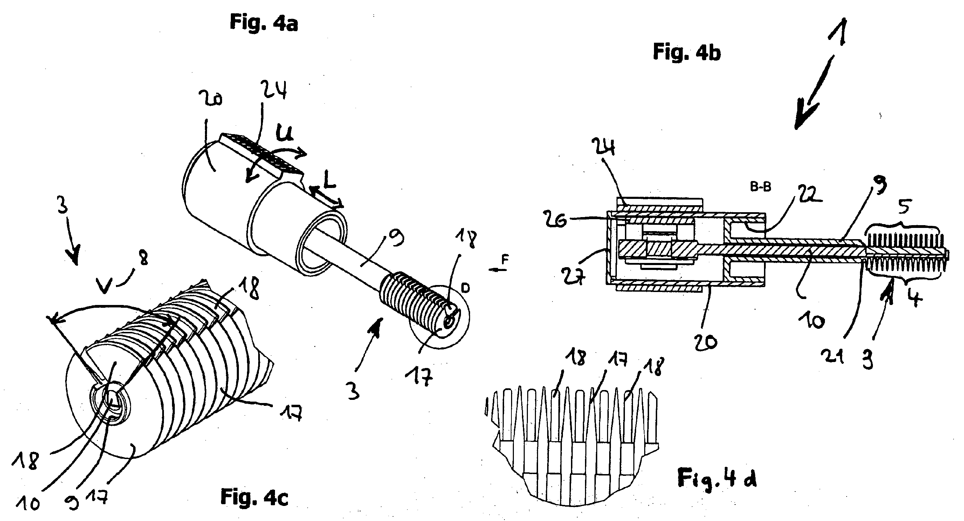

Die Figuren 4a, 4b und 4c beschreiben ein viertes Ausführungsbeispiel eines erfindungsgemäßen Applikators 1.

Dieses vierte Ausführungsbeispiel unterscheidet sich von dem ersten Ausführungsbeispiel nur dadurch, dass bei dem ersten Ausführungsbeispiel Reihen von in Umfangsrichtung hintereinander stehenden stationären Borsten 4 vorgesehen sind, die bei diesem vierten Ausführungsbeispiel jeweils durch stationäre Borstenscheiben (genau genommen Borstenscheibenabschnitte) ersetzt sind. Ein weiterer Unterschied besteht darin, dass bei dem ersten Ausführungsbeispiel eine Reihe von in Längsrichtung hintereinander stehenden mobilen Borsten 5 vorgesehen ist, die bei dem vierten Ausführungsbeispiel durch mobile Borstenscheiben 18 (genau genommen Borstenscheibenabschnitte) ersetzt sind. Dabei sind die mobilen Borstenscheiben 18 bei diesem vierten Ausführungsbeispiel in Umfangsrichtung so ausladend, dass sie mehreren (gedachten) Reihen von in Längsrichtung hintereinander stehenden mobilen Borsten entsprechen. Ansonsten funktionieren das erste und das vierte Ausführungsbeispiel identisch und sind auch entsprechend gestaltet.

Die Borstenscheiben 17, 18 bestehen vorzugsweise aus einem sehr flexiblen, aber in sich formstabilen Material, vorzugsweise aus einem Elastomer. Auf diese Art und Weise wird eine gute Abstreifbarkeit gewährleistet. Sie weisen vorzugsweise eine vom Außenumfang zum Fußbereich hin zunehmende Wandstärke auf, vgl. Fig. 4c.

Es leuchtet ein, dass die Anwendungseigenschaften der Applikatorbürste gerade bei Einsatz derartiger Borstenscheiben massiv verändert werden können, indem die mobilen Borstenscheiben in die unterschiedlichen, vom Prinzip her bereits im Rahmen des ersten Ausführungsbeispiels eingehend beschriebenen Extrempositionen oder in dazwischen liegende Positionen gebracht werden. Dies deshalb, weil es gerade bei den doch recht sperrigen Borstenscheiben 17, 18 ein großer Unterschied ist, ob das Borstenfeld 3 im Ergebnis aus lauter rundum in sich geschlossenen Borstenscheiben besteht oder aus Borstenscheiben 17, die bei entsprechender Positionierung der mobilen Borstenscheiben 18 beispielsweise über einen Winkel etwa 90° ausgeschnitten sind und dadurch einen voluminösen v-förmigen Zwischenraum 8 aufweisen, der mit Mascara beladen werden kann, vgl. Fig. 4c, wo der v-förmige Zwischenraum durch den Pfeil "V" illustriert ist.

Hervorzuheben ist, dass bei diesem vierten Ausführungsbeispiel nicht näher gezeigte Umfangsschlitze vorhanden sind, die es erlauben die mobilen Borstenscheiben 18 etwa um 90° in Umfangsrichtung zu verdrehen, so dass die mobilen Borstenscheiben vollständig in die Zwischenräume zwischen stationären Borstenscheiben 17 hineinbewegt werden können. Auf diese Art und Weise besteht die Möglichkeit das zunächst in dem v-förmigen Zwischenraum 8 befindliche Mascara großflächig in den umgebenden Zwischenräumen zwischen den stationären Borstenscheiben zu verteilen.

Ganz generell und zugleich auch mit Rückbezug auf das erste Ausführungsbeispiel lässt sich sagen, dass es bei einer Applikatorbürste mit einem runden oder zumindest halbrunden Borstenfeld sinnvoll ist zwischen den stationären Borsten bzw. Borstenscheiben einen v-förmigen Zwischenraum vorzusehen, der einen Winkelbereich von mindestens 30° bis etwa 120° überspannt. Des Weiteren ist es sinnvoll die mobilen Borsten bzw. Borstenscheiben derart beweglich zu gestalten, dass sie in Umfangsrichtung einen Winkelbereich von mindestens 30° bis etwa 180° überstreichen können.

An dieser Stelle ist der Vollständigkeit halber noch eine zeichnerisch nicht dargestellte und auch nicht durchnummerierte Variante des vierten Ausführungsbeispiels zu erwähnen - lässt man bei diesem vierten Ausführungsbeispiel am ersten Träger die Umfangsschlitze weg und sieht stattdessen nur einen Längschlitz vor, dann kommt man zu einem Ausführungsbeispiel, das bis auf die Verwendung von Borstenscheiben statt Borsten dem zweiten Ausführungsbeispiel entspricht und auch genau so funktioniert.

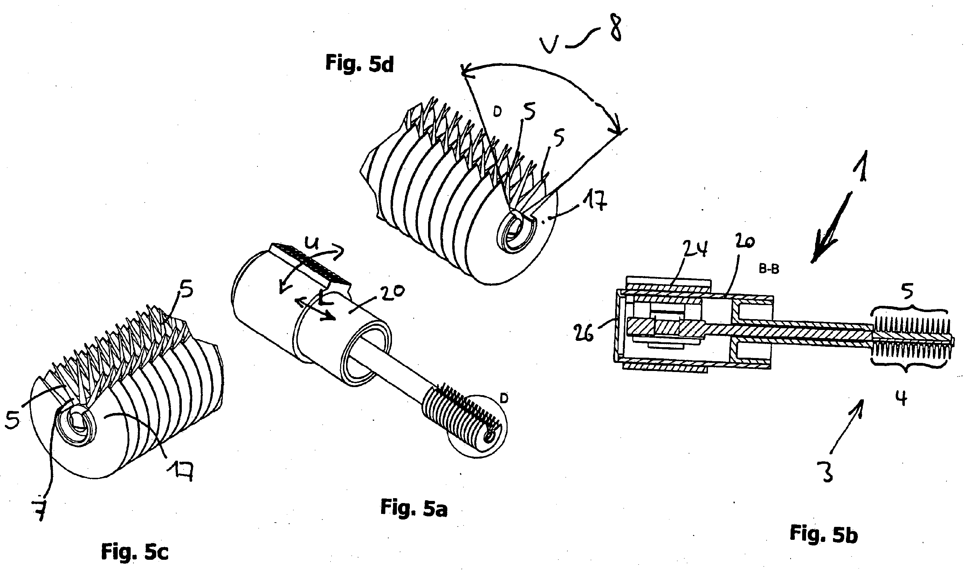

Die Figuren 5a, 5b, 5c und 5d beschreiben ein fünftes Ausführungsbeispiel eines erfindungsgemäßen Applikators 1.

Dieses fünfte Ausführungsbeispiel entspricht nahezu völlig dem vierten Ausführungsbeispiel, mit dem einzigen Unterschied, dass die mobilen Borstenscheiben des vierten Ausführungsbeispiels hier wieder in mehrere Reihen von in Längsrichtung hintereinander stehenden Borsten "aufgelöst" sind, was natürlich Einfluss auf den variablen v-förmigen Zwischenraum hat. Vergleicht man die Figuren 4c und 5c, dann erkennt man, dass der v-förmige Zwischenraum bei diesem fünften Ausführungsbeispiel durch die mobilen Borsten weniger stark gesperrt wird, als durch die in entsprechender Position befindlichen mobilen Borstenscheiben des vierten Ausführungsbeispiels.

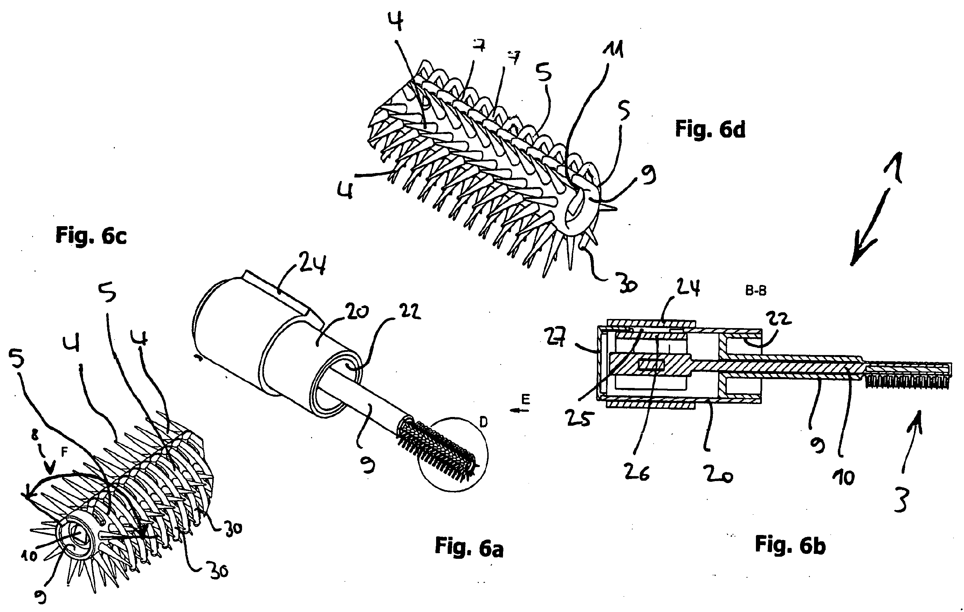

Die Figuren 6a bis 6d beschreiben ein sechstes Ausführungsbeispiel eines nicht erfindungsgemäßen Applikators 1.

Von seinem Funktionsprinzip her entspricht dieses sechste Ausführungsbeispiel dem ersten, vierten und fünften Ausführungsbeispiel, so dass das dort Gesagte identisch bzw. sinngemäß gilt.

Der einzige grundsätzliche Unterschied zum ersten Ausführungsbeispiel ist hier der, dass die mobilen Borsten sich nicht ausschließlich in im Wesentlichen radialer Richtung erstrecken. Stattdessen weisen sie zu ihrem auswärtigen Ende hin einen um etwa 90° gegen die Radialrichtung abgewinkelten Abschnitt 30 auf. Dieser Abschnitt 30 ist hier in sich gekrümmt und erstreckt sich daher im Wesentlichen in Umfangsrichtung des ersten Trägers 9.

Dabei ist der Applikator derart ausgestaltet, dass diese mobilen Borsten 5 in Umfangsrichtung zwischen zwei extremen Positionen hin und her bewegt werden können. Diese beiden Extrempositionen sind zeichnerisch nicht dargestellt, lassen sich aber anhand der von Fig. 6c gezeigten, intermediären Position nachvollziehen. Die erste Extremposition ist eine Position, in der sich die Fußbereiche der mobilen Borsten 5 am äußersten (in der Fig. 6c linken) Rand der Umfangsschlitze befinden. Die abgewinkelten Abschnitte 30 der mobilen Borsten ragen hier schräg über den gesamten variablen Freiraum 8 hinweg. Die zweite Extremposition ist eine Position, in der sich die Fußbereiche der mobilen Borsten 5 am gegenüberliegenden äußersten (in der Fig. 6c rechten) Rand der Umfangsschlitze befinden. Die abgewinkelten Abschnitte 30 der mobilen Borsten liegen nun fast vollständig im Zwischenraum zwischen den stationären Borsten, so dass der gesamte variable Freiraum 8 offen liegt, d. h. nicht von den mobilen Borsten übergriffen ist.

Auf diese Art und Weise wird, je nach aktueller Position der mobilen Borsten, Einfluss darauf genommen, wie viel Mascara, das beim Eintauchen zunächst den variablen Freiraum 8 aufgefüllt hat, im Zuge des Abstreifens wieder aus dem variablen Freiraum 8 entfernt wird. Auch hier bilden die mobilen Borsten bzw. deren abgewinkelte Abschnitte 30, solange sie nicht vollständig in die Freiräume zwischen den stationären Borsten eingefahren sind, eine Art "Distanzhalter" für den nicht gezeigten Abstreifer.

Wie man sieht, greifen die abgewinkelten Abschnitte 30 weit in den Zwischenraum zwischen Reihen aus benachbarten, in Umfangsrichtung hintereinander stehenden stationären Borsten ein. Die abgewinkelten Abschnitte 30 der mobilen Borsten 5 sind daher dazu prädestiniert das zunächst in dem variablen v-förmigen Freiraum 8 befindliche Mascara intensiv zwischen den stationären Borsten 4 zu verteilen.

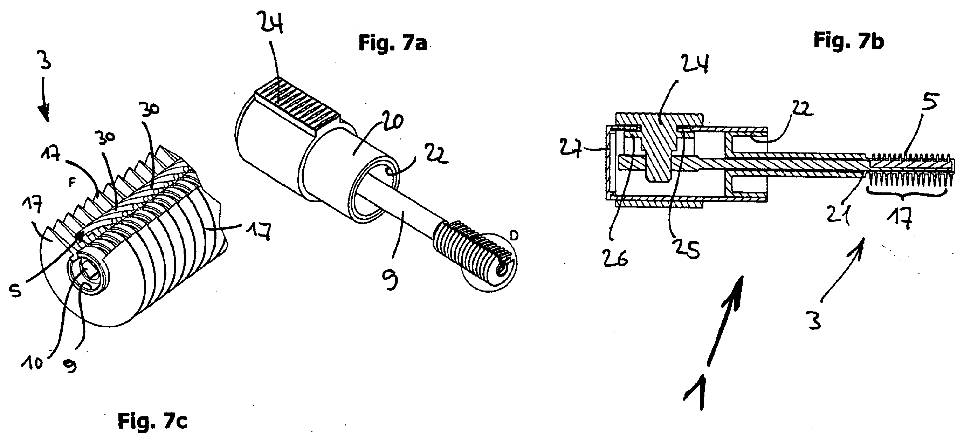

Die Figuren 7a bis 7c beschreiben ein siebtes Ausführungsbeispiel eines erfindungsgemäßen Applikators 1.

Das siebte Ausführungsbeispiel ist mit dem sechsten Ausführungsbeispiel nahezu identisch. Es unterscheidet sich von diesem lediglich insoweit, dass die stationären Borsten des sechsten Ausführungsbeispiels durch Borstenscheiben der bereits oben näher beschriebenen Art ersetzt sind.

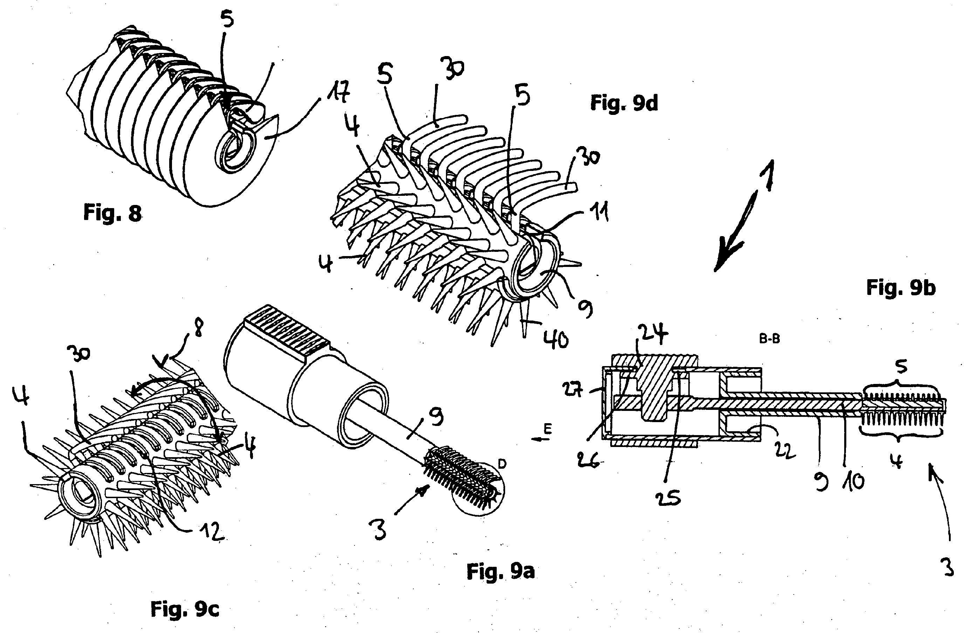

Die Figur 8 beschreibt ein achtes Ausführungsbeispiel, das mit dem siebten Ausführungsbeispiel identisch ist. Es unterscheidet sich von diesem lediglich insoweit, dass die mobilen Borsten 5 am auswärtigen Ende ihres abgewinkelten Abschnitts 30 hin flächig ausgeführt sind, so dass in der von Fig. 8 gezeigten Position eine noch bessere Abdeckung des variablen Freiraums 8 ermöglicht wird.

Die Figuren 9a bis 9d beschreiben ein neuntes Ausführungsbeispiel eines nicht erfindungsgemäßen Applikators 1.

Das neunte Ausführungsbeispiel ist mit dem sechsten Ausführungsbeispiel nahezu identisch. Es unterscheidet sich von diesem lediglich insoweit, dass die abgewinkelten Abschnitte 30 der mobilen Borsten 5 sich nicht wie beim sechsten Ausführungsbeispiel weitgehend in Umfangsrichtung des ersten Trägers 9 erstrecken, sondern eher tangential relativ zu ihrem jeweiligen Fußpunkt orientiert sind - so dass die abgewinkelten Abschnitte 30 stärker von der Applikatorbürste abstehen.

Daher eignen sich die abgewinkelten, vergleichsweise lang ausgeführten Abschnitte 30 der mobilen Borsten dieses Ausführungsbeispiels ausgezeichnet dazu, die Wimpern aktiv zu greifen bzw. aktiv zum Applikator hinzuleiten. Zu diesem Zweck werden die mobilen Borsten 5 in die von Fig. 9d gezeigte Position gebracht, in der ihre abgewinkelten Abschnitte 30 ausladend, sozusagen "gabelartig" vom Applikator abstehen. Sobald die Wimpern in die Zwischenräume zwischen den mobilen Borsten eingeführt sind, werden die mobilen Borsten sozusagen "eingedreht". Währenddessen wird der Applikator näher an das Auge herangeführt.

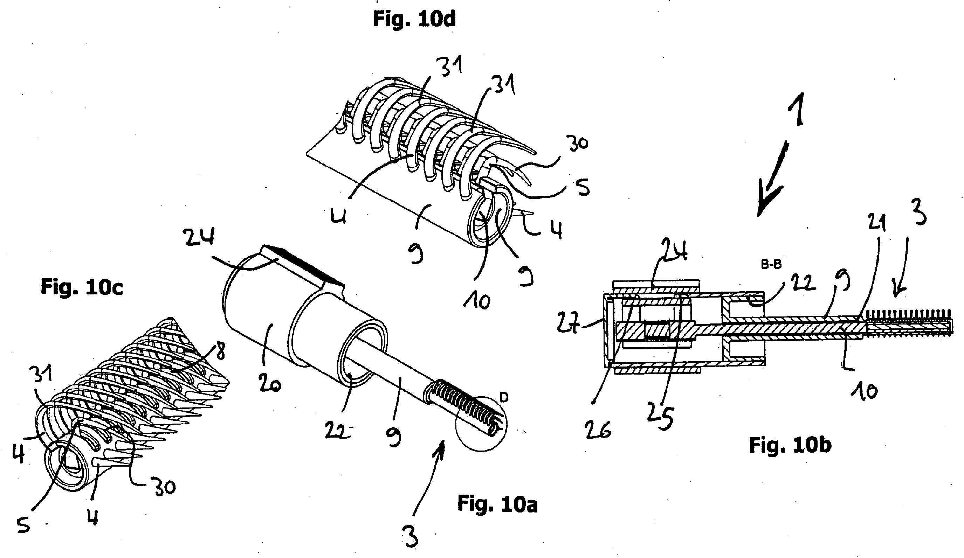

Die Figuren 10a bis 10d beschreiben ein zehntes Ausführungsbeispiel eines nicht erfindungsgemäßen Applikators 1.

Das zehnte Ausführungsbeispiel entspricht im Wesentlichen dem neunten Ausführungsbeispiel, so dass das dort Gesagte sinngemäß gilt.

Der Unterschied zum neunten Ausführungsbeispiel liegt darin, dass das zehnte Ausführungsbeispiel an einem Rand des variablen Freiraums 8 eine Reihe von in Längsrichtung hintereinander stehenden stationären Borsten 4 aufweist, die ähnlich abgewinkelte Abschnitte 30 aufweisen, wie zuvor für die mobilen Borsten 5 beschrieben. Der andere Rand des variablen Freiraums 8 wird durch eine Reihe regulär, d. h. wie beispielsweise beim ersten Ausführungsbeispiel ausgebildete Borsten berandet. Auch der Rest des stationären Borstenfeldes wird vielfach so ausgebildet sein, wie beispielsweise beim ersten Ausführungsbeispiel beschrieben. Wie die Figuren 10a bis 10c zeigen, ist letzteres indes kein Muss, je nach Zielsetzung kann der Borstenbesatz entlang des übrigen Umfangs des ersten Trägers 9 ausnahmsweise auch entfallen.

Wie die Figuren zeigen, können die mobilen Borsten so positioniert werden, dass sie sich von innen her im Wesentlichen an die Reihe mit den stationären abgewinkelten Borsten 4 anlegen.

Auf diese Art und Weise kommt den mobilen Borsten 5 eine so von den anderen Ausführungsbeispielen nicht verwirklichte Doppelfunktion zu - zum einen kann über die Positionierung der mobilen Borsten Einfluss auf das Applikationsverhalten des variablen Freiraums 8 genommen werden, nach dem gleichen Prinzip, wie bei allen anderen Ausführungsbeispielen auch. Zum andern bilden die abgewinkelten mobilen Borsten 5 in Zusammenwirkung mit den ebenfalls abgewinkelten stationären Borsten 4 bei Bedarf eine Art Wimpernzange, die dazu eingesetzt werden kann um eine Anzahl von Wimpern zu greifen und sie zu formen, indem ihnen beispielsweise vor dem vollständigen Auftragen des Mascara ein Schwung in aufwärtiger Richtung verliehen wird ("Curling").

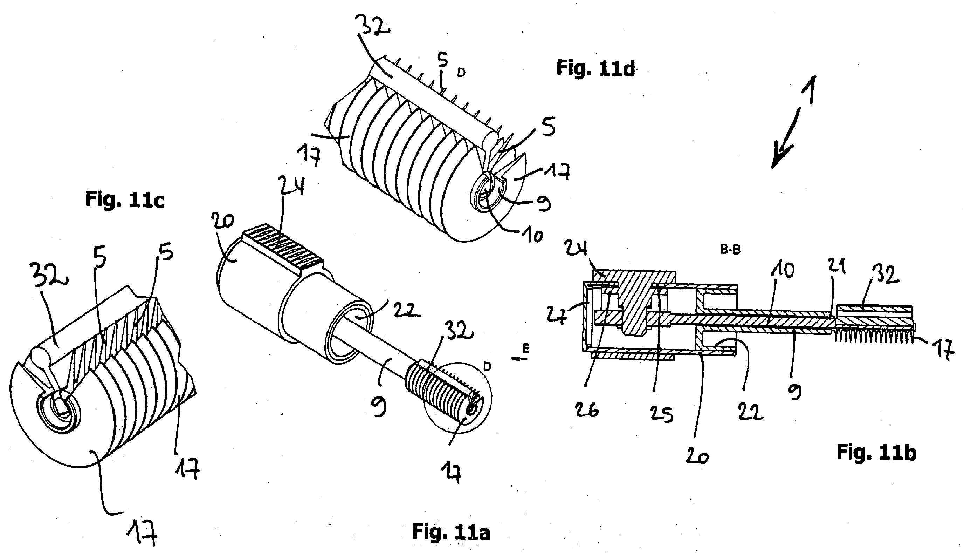

Die Figuren 11a bis 11d beschreiben ein elftes Ausführungsbeispiel eines erfindungsgemäßen Applikators 1.

Das elfte Ausführungsbeispiel ist mit dem fünften Ausführungsbeispiel nahezu identisch. Es unterscheidet sich von diesem lediglich insoweit, dass neben den mobilen Borsten zusätzlich ein mobiler Füllkörper 32 vorhanden ist, der bei diesem Ausführungsbeispiel balkenartig ausgestaltet ist und aus einem schmalen, in etwa rechteckigen Fußabschnitt besteht, an den sich nach außen hin ein stabförmiger Abschnitt anschließt.

Der mobile Füllkörper 32 kann in verschiedene Positionen innerhalb des variablen Freiraums 8 gebracht werden. Wird er so positioniert, dass er unmittelbar im Anschluss an die den variablen Freiraum 8 berandenden stationären Borstenscheiben 17 zu liegen kommt, dann bleibt auf seiner anderen Seite ein großer, durchgehender Restbereich des Freiraums 8 frei. Wird er hingegen so positioniert, dass er in der Mitte des Freiraums 8 zu liegen kommt, dann unterteilt er den Freiraum 8 in zwei noch verbleibende kleinere Restbereiche. Es leuchtet ein, dass auch auf diese Art und Weise das Applikationsverhalten des Freiraums 8 beeinflusst werden kann, wobei der mobile Füllkörper 32 im hier vorliegenden Fall seinen Einfluss im Verbund mit den mobilen Borsten 5 entfaltet.

Dadurch, dass der mobile Füllkörper 32 in Umfangsrichtung vollständig geschlossen ist, vermag er zudem das zunächst in dem oder den Restbereichen des Freiraums 8 befindliche Mascara recht effektiv in die Zwischenräume zwischen den angrenzenden stationären Borstenscheiben 17 zu verfrachten, sobald er in Umfangsrichtung hin und her bewegt wird.

Aus dem gleichen Grund kann der mobile Füllkörper 32 bei Bedarf auch dazu herangezogen werden, um einzelne Augenwimpern zwischen sich und den angrenzenden stationären Borstenscheiben 17 zu greifen ("einzuklemmen") und in gewisser Weise dem bereits oben für das zehnte Ausführungsbeispiel beschriebenen Curling zu unterziehen.

Es leuchtet ein, dass der mobile Füllkörper 32 nicht nur zusammen mit stationären Borstenscheiben 17 sinnvoll eingesetzt werden kann, sondern auch zusammen mit stationären Borsten nach Art des zehnten Ausführungsbeispiels oder auch nach Art des ersten Ausführungsbeispiels - letzteres jedenfalls dann, wenn auf die Möglichkeit ihn zum Curling zu verwenden verzichtet wird.

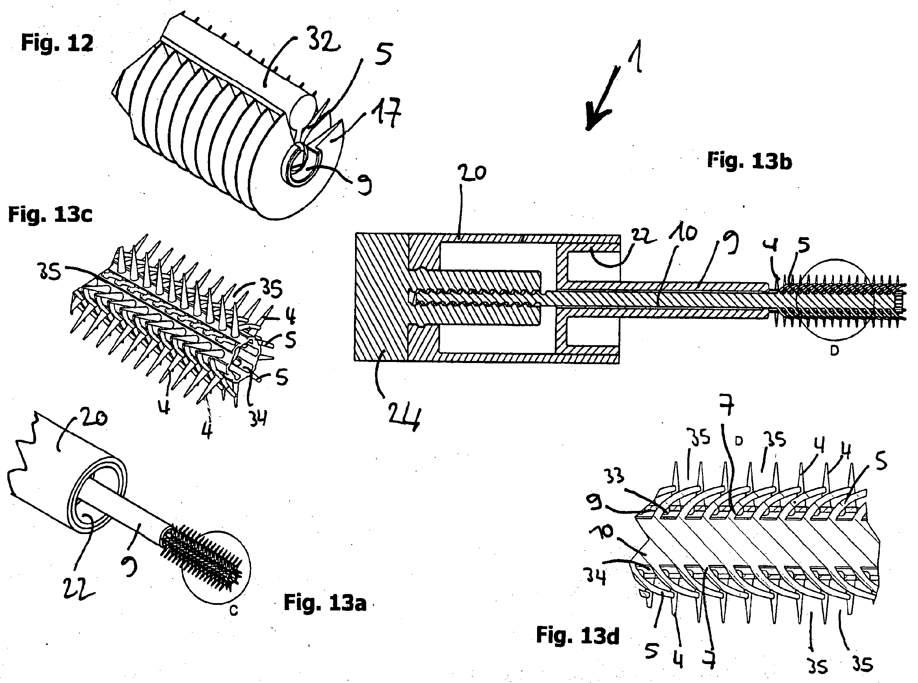

Die Figur 12 zeigt ein zwölftes Ausführungsbeispiel eines erfindungsgemäßen Applikators 1.

Das zwölfte Ausführungsbeispiel ist mit dem elften Ausführungsbeispiel identisch. Der einzige Unterschied ist, dass der stabförmige Abschnitt bei diesem Ausführungsbeispiel einen größeren Durchmesser aufweist.

Die Figuren 13a bis 13d beschreiben ein dreizehntes Ausführungsbeispiel eines nicht erfindungsgemäßen Applikators 1.

Das dreizehnte Ausführungsbeispiel ist konzeptionell mit keinem der bisherigen Ausführungsbeispiele vergleichbar.

Für den ersten und zweiten Träger 9 bzw. 10, den Griff 20 und die Borsten 4, 5 gilt das bereits zum ersten Ausführungsbeispiel Gesagte, soweit nachfolgend nichts anderes beschrieben wird.

Der entscheidende Unterschied ist hier der, dass der erste Träge 9, anders als das bei den vorhergehenden Ausführungsbeispielen der Fall ist, nicht einen oder mehrere Schlitze aufweist, die die mobilen Borsten als ganze, ohne selbst verformt zu werden, entlang geschoben werden können, um das Applikationsverhalten des Applikators zu ändern.

Stattdessen ist der erste Träger 9 im Bereich des Borstenfeldes 3 als in Umfangsrichtung in sich geschlossenes Rohr ausgeführt, das eine Anzahl von Einzugsöffnungen 33 aufweist, durch die jeweils eine einzelne mobile Borste 5 nach außen ragt (u. U. können auch mehrere einzelne mobile Borsten gemeinsam durch eine solche Einzugsöffnung nach außen ragen). Jede dieser mobilen Borsten ist mit ihrem Fußbereich an einem zweiten Träger 10 befestigt. Der mit den mobilen Borsten besetzte Abschnitt des zweiten Trägers 10 ist verschiebbar im ersten Träger 9 gelagert. Zwischen dem ersten und dem zweiten Träger ist im Bereich der mobilen Borsten ein Zwischenraum vorgesehen, der hinreichend groß ist, um die mobilen Borsten aufzunehmen und somit (vgl. etwa Fig. 13c) als Borstenspeicher 34 fungiert, dessen örtliche Spalthöhe mindestens dem Durchmesser der mobilen Borsten entspricht zzgl. einer gewissen Zugabe, die ein ansonsten durch die gespeicherten Abschnitte der mobilen Borsten verursachtes Klemmen zwischen dem ersten und dem zweiten Träger verhindert.

Wie man anhand der Fig. 13c sehen kann, wird dieser Borstenspeicher 34 beim vorliegenden Ausführungsbeispiel durch mehrere Nuten auf der Innenseite des ersten Trägers 9 gebildet, in die die mobilen Borsten 5 jeweils eingezogen werden können, wenn der zweite Träger 10 entsprechend in Längsrichtung verschoben wird. Dabei dienen die die Nuten berandenden Flächen auf der Innenseite des ersten Borstenträgers jeweils als Führungsflächen, die der zweite Träger mit seinen entsprechenden Gegenflächen entlang gleitet.

Die mobilen Borsten 5 sind hinreichend elastisch um sich ohne Funktionsstörungen zu verursachen schlangenartig biegen zu lassen. Vorzugsweise sind die mobilen Borsten an dem zweiten Träger 10 angespritzt.

Wird der zweite Träger 10 nun derart relativ zum ersten Träger 9 bewegt, dass sich der Fußbereich einer mobilen Borste von der zugehörigen Einzugsöffnung 33 entfernt, durch die diese Borste durch den ersten Träger hindurch nach außen ragt, dann wird der bislang nach außen über den ersten Träger hinausragende Teil diese Borste 5 entlang ihrer Längsachse durch die Einzugsöffnung 33 in den Borstenspeicher 34 eingezogen. Die Borste 5 ragt dann also nur noch ein kürzeres Stück weit nach außen. Umgekehrt wird diese Borste entlang ihrer Längsachse durch die Einzugsöffnung 33 aus dem Borstenspeicher 34 herausgeschoben, sobald sich der zweite Träger derart relativ zum ersten Träger bewegt, dass sich der Fußbereich einer Borste von der zugehörigen Einzugsöffnung nähert. Die Borste ragt dann also ein längeres Stück weit nach außen. Es leuchtet ein, dass das das Applikationsverhalten des Applikators ändert.

Ist der Applikator mit mobilen Borsten 5 ausgestattet, die zwischen sie allseitig umgebende stationäre Borsten 4 hineinragen - so wie von diesem Ausführungsbeispiel illustriert - dann ändert sich durch das Einziehen oder Herausschieben der mobilen Borsten der lokale Freiraum 35 zwischen den umgebenden stationären Borsten, was zu der besagten Änderung des Applikationsverhaltens führt.

Als Variante ist es allerdings auch denkbar, dass die hier beschriebenen mobilen Borsten nicht nur zwischen sie allseitig umgebende stationäre Borsten hineinragen, sondern stattdessen beispielsweise in einen v-förmigen Freiraum 8, der den Besatz aus stationären Borsten abschnittweise unterbricht, so wie im Rahmen der vorangehenden Ausführungsbeispiele wiederholt beschrieben.

Der Vollständigkeit halber ist noch festzuhalten, dass sich der Manipulator 24 deutlich von dem des zuvor geschilderten Ausführungsbeispiels unterscheidet, da hier ein schraubenartiger Mechanismus zum Einsatz kommt um den zweiten Träger 10 feinfühlig und ohne großen Kraftaufwand relativ zum ersten Träger 9 zu verschieben und so die mobilen Borsten 5 einzuziehen oder herauszuschieben.

### Bezugszeichenliste

- 1: Applikator
- 2: Applikatorbürste
- 3: Borstenfeld
- 4: stationäre Borsten
- 5: mobile Borsten
- 6: Fußbereich der stationären Borsten
- 7: Fußbereich der mobilen Borsten
- 8: zu befrachtender Freiraum zwischen den Borsten
- 9: erster Träger
- 10: zweiter Träger
- 11: Längsschlitz
- 12: Umfangsschlitz
- 13: in Längsrichtung nebeneinander angeordnete Borsten
- 14: Fenster im ersten Teil des Borstenfeldes
- 15: Borstenabschnitt, der sich in Umfangsrichtung erstreckt
- 16: zwei Reihen benachbarter Borsten
- 17: stationäre Borstenscheibe
- 18: mobile Borstenscheibe
- 19 20: Griff
- 21: Gleitführung
- 22 23: Betätigungsvorrichtung
- 24: Manipulator
- 25: Grifföffnung
- 26: Kragen
- 27: Deckel
- 28: Leisten
- 29: Führungsleiste
- 30: Abschnitte
- 31 32: mobiler Füllkörper
- 33: Einzugsöffnungen
- 34: Borstenspeicher
- 35: lokaler Freiraum zwischen den umgebenden stationären Borsten
- 36: stirnseitig zugänglicher Sitz am zweiten Träger 10
- 41: Längsrichtung
- U: Umfangsrichtung (Pfeil)
- L: Längsrichtung (Pfeil)

## Patentansprüche

1. Applikator (1) zur Applikation eines dekorativen Kosmetikums mit fließfähiger Beschaffenheit aus einem Vorratsbehälter, wie insbesondere Mascara, mit einer Applikatorbürste, welche aus einem ersten stabförmigen Träger (9) besteht, der mit einem Borstenfeld (3) aus von ihm nach außen abstehenden Borsten (4, 5) und/oder Borstenscheiben (17, 18) ausgerüstet ist, das stationäre Borsten (4) und/oder Borstenscheiben (17) umfasst, wobei das Borstenfeld (3) zusätzlich aus mobilen Borsten (5) und/oder Borstenscheiben (18) gebildet wird, die von einem zweiten stabförmigen Träger abstehen und deren Fußbereich relativ zum Fußbereich der stationären Borsten (4) bzw. Borstenscheiben (17) verschiebbar ist, wobei die besagte Verschiebbarkeit eine derartige ist, dass ein Freiraum (8) zwischen den stationären Borsten bzw. Borstenscheiben, der durch ein Eintauchen der Bürste in das Reservoir mit dem Kosmetikum befrachtet werden kann, willkürlich variiert werden kann, wobei der erste stabförmige Träger (9) an seinem Außenumfang mindestens einen Umfangsschlitz (12) aufweist, durch den hindurch mindestens eine Borste (5) bzw. Borstenscheibe (18) des zweiten stabförmigen Trägers (10) nach außen ragen kann, wobei zumindest eine Borste.. (5) bzw. Borstenscheibe (18) des zweiten stabförmigen Trägers durch Verschieben innerhalb des ihr zugeordneten Umfangsschlitzes (12) in verschiedene Positionen relativ zu den Borsten (4) bzw. Borstenscheiben (17) des ersten stabförmigen Trägers (9) bringbar ist, und wobei sich der Umfangsschlitz (12) bis in einen Bereich zwischen zwei oder mehreren in Längsrichtung nebeneinander angeordneten stationären Borsten (4) bzw. Borstenscheiben (17) erstreckt, **dadurch gekennzeichnet, dass** die zumindest eine entlang des Schlitzes (12) bewegliche Borste (5) bzw. Borstenscheibe (18) so zwischen benachbarte stationäre Borsten (4) bzw. Borstenscheiben (17) bringbar ist, dass sie mit diesen in Längsrichtung des applikators gesehen auf einer Linie liegt

2. Applikator (1) nach Anspruch 1, **dadurch gekennzeichnet, dass** der erste stabförmige Träger (9) in Gestalt eines Rohrs, ausgestaltet ist an welchem der Fußbereich der stationären Borsten (4) bzw. Borstenscheiben (17) festgelegt ist und wobei an dem in dem ersten stabförmigen Träger verschiebbaren zweiten stabförmigen Träger (10) der Fußbereich der mobilen Borsten (5) bzw. Borstenscheiben (18) festgelegt ist, wobei die Träger (9, 10) so gelagert sind, dass sie relativ zueinander in willkürlich vom Anwender gewählter Position festgesetzt werden können.

3. Applikator (1) nach Anspruch 2, **dadurch gekennzeichnet, dass** der erste stabförmige Träger (9) an seinem Außenumfang mindestens einen Längsschlitz (11) aufweist, durch den hindurch Borsten (5) bzw. Borstenscheiben (18) des zweiten stabförmigen Trägers (10) nach außen ragen zwischen die Borsten des ersten stabförmigen Trägers.

4. Applikator (1) nach Anspruch 3, **dadurch gekennzeichnet, dass** die Borsten (5) bzw. Borstenscheiben (18) des zweiten stabförmigen Trägers (10) durch Verschieben innerhalb des Längsschlitzes (11) in verschiedene Positionen relativ zu den Borsten (4) bzw. Borstenscheiben (17) des ersten stabförmigen Trägers (9) bringbar sind.

5. Applikator (1) nach einem der vorhergehenden Ansprüche in Verbindung mit Anspruch 3, **dadurch gekennzeichnet, dass** zumindest ein Längsschlitz (11) vorhanden ist, in den mindestens ein Umfangsschlitz (12) einmündet.

6. Applikator (1) nach einem der vorhergehenden Ansprüche, **dadurch gekennzeichnet, dass** die stationären Borsten (4) bzw. Borstenscheiben (17) einen ersten Teil des Borstenfeldes (3) bilden, der ein Fenster aufweist, das frei von stationären Bosten (4) bzw. Borstenscheiben (17) ist und durch das eine Anzahl mobiler Borsten (5) bzw. Borstenscheiben (18) nach außen ragt, deren Fußbereich innerhalb der Grenzen des Fensters verschiebbar ist.

7. Applikator (1) nach einem der vorhergehenden Ansprüche, **dadurch gekennzeichnet, dass** die Applikatorbürste mobile Borsten (5) besitzt, deren Fußbereich in Umfangsrichtung (U) verschiebbar ist und die zu ihrem Ende hin einen Abschnitt (30) aufweisen, der sich im Wesentlichen in Umfangsrichtung erstreckt und der so gestaltet ist, dass er in Abhängigkeit von der Positionierung des Fußbereichs mehr oder minder weit im Zwischenraum zwischen zwei benachbarten Reihen stationärer Borsten (4) bzw. zwei benachbarten stationären Borstenscheiben (17) liegt.

8. Applikator (1) nach einem der vorhergehenden Ansprüche, **dadurch gekennzeichnet, dass** der zweite stabförmige Träger (10) - an Stelle mindestens einer gedachten sich in Längsrichtung erstreckenden Borstenreihe - einen sich in Längsrichtung erstreckenden Füllkörper (32) aufweist.

9. Applikator (1) nach einem der vorhergehenden Ansprüche, **dadurch gekennzeichnet, dass** zumindest ein Teil der das mobile Borstenfeld bildenden Borsten (5) oder Borstenscheiben (18) derart verschiebbar ist, dass es zeitweilig in eine Position bringbar ist, die außerhalb des stationären Borstenfeldes liegt.

10. Applikator (1) nach einem der vorhergehenden Ansprüche in Verbindung mit Anspruch 2, **dadurch gekennzeichnet, dass** der zweite stabförmige Träger (10) an seiner dem Griff des Applikators abgewandten Stirnseite einen Borstenbesatz oder Kamm aufweist, der je nach Position des zweiten stabförmigen Trägers (10) innerhalb des ersten stabförmigen Trägers (9) liegt oder aus einer stirnseitigen Öffnung des ersten stabförmigen Trägers (9) herausragt.

## Claims

1. Applicator (1) for application of a decorative cosmetic with a flow-capable property from a supply reservoir, such as in particular mascara, with an applicator brush comprising a first rod-shaped carrier (9) which has been provided with a bristle field (3) made from bristles (4, 5) protruding away from it and/or bristle disks (17, 18), whereas the bristle field (3) is additionally formed of mobile bristles (5) and/or bristle disks (18) which protrude from a second rod-shaped carrier and the foot area of which can be displaced relative to the foot area of the stationary bristles (4) or bristle disks (17), whereas the said displaceability is such that a cavity (8) between the stationary bristles or bristle disks, which can be filled with the cosmetic by immersion of the brush into the reservoir, can be varied at will, with the first rod-shaped carrier (9) manifesting at least one circumferential slot on its external circumference, through which at least one bristle (5) or bristle disk (18) of the second rod-shaped carrier (10) can protrude to the outside, with at least one bristle (5) or bristle disk (18) of the second rod-shaped carrier being able to be placed in various positions relative to the bristles (4) or bristle disks (17) of the first rod-shaped carrier by displacement within the circumferential slot (12) assigned to it, and in which context the circumferential slot (12) extends into an area between two or more stationary bristles (4) or bristle disks (17) arranged next to one another in a longitudinal direction, wherein at least one bristle (5) or bristle disk (18) which is movable along the slot (12) can be placed between neighbouring stationary bristles (4) or bristle disks (17) such that it is on a line with them looking in the longitudinal direction of the applicator.

2. Applicator (1) in accordance with Claim 1, wherein the first rod-shaped carrier (9) has been designed in the form of a tube, on which the foot area of the stationary bristles (4) or bristle disks (17) has been set and the foot area of the mobile bristles (5) or bristle disks (18) has been set on the second rod-shaped carrier (10) which can be displaced in the first rod-shaped carrier, in which context the carriers (9, 10) have been positioned such that they can be set relative to one another in any position to be chosen by the user.

3. Applicator (1) in accordance with Claim 2, wherein the first rod-shaped carrier (9) manifests at least one longitudinal slot (11) on its outer circumference, through which bristles (5) or bristle disks (18) of the second rod-shaped carrier protrude to the outside between the bristles of the first rod-shaped carrier.

4. Applicator (1) in accordance with Claim 3, wherein the bristles (5) or bristle disks (18) of the second rod-shaped carrier (10) can be placed into various positions relative to the bristles (4) or bristle disks (17) of the first rod-shaped carrier (9) by displacement within the longitudinal slot (11).

5. Applicator (1) according to one of the above claims in combination with Claim 3, wherein at least one longitudinal recess (11), which at least one circumferential slot (12) enters, exists.

6. Applicator (1) according to one of the above claims, wherein the stationary bristles (4) or bristle disks (17) form a first part of the bristle field (3), which manifests a window which is free of stationary bristles (4) or bristle disks (17) and through which a number of mobile bristles (5) or bristle disks (18) protrudes to the outside, the foot area of which can be displaced within the limits of the window.

7. Applicator (1) according to one of the above claims, wherein the applicator brush possesses mobile bristles (5), the foot area of which is displaceable in a circumferential direction (U), and which manifest a section towards their end, which essentially extends in a circumferential direction and has been designed such that it is more or less far in the intermediate area between two neighbouring rows of stationary bristles (4) or two neighbouring stationary bristle disks (17) as a function of the positioning of the foot area.

8. Applicator (1) according to one of the above claims, wherein the second rod-shaped carrier (10) - instead of at least one conceptional series of bristles extending in a longitudinal direction - manifests a filling body (32) extending in a longitudinal direction.

9. Applicator (1) according to one of the above claims, wherein at least one part of the bristles (5) or bristle disks (18) forming the mobile bristle field is displaceable such that it can temporarily be placed in a position which is outside the stationary bristle field.

10. Applicator (1) according to one of the above claims in combination with Claim 2, wherein the second rod-shaped carrier (10) manifests a bristle trimming or comb on its front side pointing away from the handle of the applicator, which, depending on the position of the second rod-shaped carrier (10), is within the first rod-shaped carrier (9) or protrudes out of an opening on the front side of the first rod-shaped carrier (9).

## Revendications

1. Applicateur (1) pour l'application d'un cosmétique décoratif présentant des propriétés fluides depuis une réservoir, comme le mascara notamment, avec une brosse d'applicateur qui est composée d'un premier support en forme de tige (9), lequel est équipé d'une zone de brosse (3) composée de poils (4, 5) et/ou de disques de poils (17, 18) s'écartant de ce dernier vers l'extérieur et englobant des poils (4) et/ou disques de poils (17) fixes, la zone de brosse (3) étant en plus formée de poils (5) et/ou disques de poils (18) mobiles, s'écartant d'un deuxième support en forme de tige et dont la base est déplaçable par rapport à la base des poils (4) et/ou disques de poils (17) fixes, ladite déplaçabilité étant telle qu'un espace libre (8) entre les poils et/ou disques de poils fixes, qui peut être chargé en cosmétique par une immersion de la brosse dans le réservoir, puisse être varié arbitrairement, le premier support en forme de tige (9) présentant, sur son pourtour extérieur, au moins une fente circonférentielle (12), à travers laquelle au moins un poil (5) et/ou disque de poils (18) du deuxième support en forme de tige (10) peut faire saillie vers l'extérieur, moyennant quoi au moins un poil (5) et/ou disque de poils (18) du deuxième support en forme de tige peut être amené par déplacement à l'intérieur de la fente circonférentielle (12) qui lui est affectée dans diverses positions par rapport aux poils (4) et/ou disques de poils (17) du premier support en forme de tige (9) et moyennant quoi la fente circonférentielle (12) s'étend jusque dans une zone entre deux ou plusieurs poils (4) et/ou disques de poils (17) fixes, disposés les uns à côté des autres en sens longitudinal, **caractérisée par le fait qu'**au moins un poil (5) et/ou disque de poils (18) mobile le long de la fente (12) peut être amené entre les poils (4) et/ou disques de poils (17) fixes adjacents de façon à se trouver avec celui-ci sur une ligne, vu dans le sens longitudinal de l'applicateur.

2. Applicateur (1) conformément à la revendication n°1, **caractérisé par le fait que** le premier support en forme de tige (9) est conçu sous forme de tube, sur lequel la base des poils (4) et/ou disques de poils (17) fixes est fixée, moyennant quoi la base des poils (5) et/ou disques de poils (18) mobiles est fixée sur le deuxième support en forme de tige (10) déplaçable dans le premier support en forme de tige, les supports (9, 10) étant logés de façon à pouvoir être fixés les uns par rapport aux autres dans une position choisie arbitrairement par l'utilisateur.

3. Applicateur (1) conformément à la revendication n°2, **caractérisé par le fait que** le premier support en forme de tige (9) présente, sur son pourtour extérieur, au moins une fente longitudinale (11) à travers laquelle des poils (5) et/ou disques de poils (18) du deuxième support en forme de tige (10) sont en saillie vers l'extérieur entre les poils du premier support en forme de tige.

4. Applicateur (1) conformément à la revendication n°3, **caractérisé par le fait que** les poils (5) et/ou disques de poils (18) du deuxième support en forme de tige (10) peuvent être amenés par déplacement à l'intérieur de la fente longitudinale (11) dans diverses positions par rapport aux poils (4) et/ou disques de poils (17) du premier support en forme de tige (9).

5. Applicateur (1) conformément à l'une des revendications précédentes en relation avec la revendication n°3, **caractérisé par le fait qu'**au moins une fente longitudinale (11), dans laquelle débouche au moins une fente circonférentielle (12) est présente.

6. Applicateur (1) conformément à l'une des revendications précédentes, **caractérisé par le fait que** les poils (4) et/ou disques de poils (17) fixes forment une première partie de la zone de brosse (3) qui présente une fenêtre qui est exempte de poils (4) et/ou disques de poils (17) fixes et par laquelle un certain nombre de poils (5) et/ou disques de poils (18) mobiles, dont la base est déplaçable dans les limites de la fenêtre, est en saillie vers l'extérieur.

7. Applicateur (1) conformément à l'une des revendications précédentes, **caractérisé par le fait que** la brosse d'applicateur possède des poils mobiles (5), dont la base est déplaçable en sens circonférentiel (U) et qui présentent vers leur extrémité une section (30) qui s'étend essentiellement en sens circonférentiel et qui est conçue de façon à se situer, en fonction du positionnement de la base, plus ou moins loin dans l'espace intermédiaire entre deux séries adjacentes de poils fixes (4) et/ou deux disques de poils fixes (17) adjacents.

8. Applicateur (1) conformément à l'une des revendications précédentes, **caractérisé par le fait que** le deuxième support en forme de tige (10) présente un corps de remplissage (32) s'étendant en sens longitudinal à la place au moins d'une série de poils conceptuelle s'étendant en sens longitudinal.

9. Applicateur (1) conformément à l'une des revendications précédentes, **caractérisé par le fait qu'**au moins une partie des poils (5) ou disques de poils, (18) formant la zone de brosse mobile, est déplaçable de sorte à pouvoir être amenée temporairement dans une position qui se situe en dehors de la zone de brosse fixe.

10. Applicateur (1) conformément à l'une des revendications précédentes en relation avec la revendication n°2, **caractérisé par le fait que** le deuxième support en forme de tige (10) présente, sur sa face frontale partant de la poignée de l'applicateur, une garniture de brosse ou un peigne qui se trouve, selon la position du deuxième support en forme de tige (10), à l'intérieur du premier support en forme de tige (9) ou qui fait saillie depuis une ouverture côté frontal du premier support en forme de tige (9).
